Europäisches Patentamt

European Patent Office

Office européen des brevets

(11) Veröffentlichungsnummer: **0 165 391**

**A1**

(12) # EUROPÄISCHE PATENTANMELDUNG

(21) Anmeldenummer: 85104079.0

(22) Anmeldetag: 03.04.85

(51) Int. Cl.⁴: **G 21 F 9/30**
**G 21 F 9/10**

(30) Priorität: 22.05.84 DE 3418986

(43) Veröffentlichungstag der Anmeldung:
**27.12.85 Patentblatt 85/52**

(84) Benannte Vertragsstaaten:
**BE CH FR GB LI NL**

(71) Anmelder: **Kernforschungszentrum Karlsruhe GmbH**
**Weberstrasse 5**
**D-7500 Karlsruhe 1(DE)**

(72) Erfinder: **Wieczorek, Herbert, Dr.**
**Hebelstrasse 46**
**D-7504 Weingarten(DE)**

(72) Erfinder: **Oser, Bernhard**
**Uhlandstrasse 43**
**D-7500 Karlsruhe 21(DE)**

(54) **Verfahren zur Überführung von im festen Rückstand eines Sulfataufarbeitungsverfahrens für organische, aktinidenhaltige, radioaktive Festabfälle befindlichen Aktinidenionen in einen verwertbaren Zustand.**

(57) Verfahren zur Überführung von im festen Rückstand eines Sulfataufarbeitungsverfahrens für organische, aktinidenhaltige, radioaktive Festabfälle befindlichen Aktinidenionen, welche in Form von wasserlöslichen Sulfato-Komplexen vorliegen, in einen verwertbaren Zustand.

Dies wird dadurch erreicht, daß

a) der Rückstand mit Wasser oder 1 bis 2 molarer Salpetersäure aufgenommen wird, wobei der größte Teil in Lösung geht,

b) die entstandene Lösung von den unlöslichen Bestandteilen des Rückstandes abgetrennt wird und auf eine Temperatur im Bereich von 40°C bis unterhalb des Siedepunktes erhitzt wird,

c) der heißen Lösung eine wäßrige Bariumnitrat-Lösung in einer Menge hinzugesetzt wird, die einem geringen Überschuß über der zur vollständigen Fällung der Sulfationen stöchiometrisch erforderlichen Menge entspricht,

- 1 -

Verfahren zur Überführung von im festen Rückstand eines Sulfataufarbeitungsverfahrens für organische, aktinidenhaltige, radioaktive Festabfälle befindlichen Aktinidenionen in einen verwertbaren Zustand.

Die Erfindung betrifft ein Verfahren zur Überführung von im festen Rückstand eines Sulfataufarbeitungsverfahrens für organische, aktinidenhaltige, radioaktive Festabfälle befindlichen Aktinidenionen, welche in Form von wasserlöslichen Sulfatokomplexen vorliegen, in einen verwertbaren Zustand.

Unter Sulfataufarbeitungsverfahren für organische Festabfälle sind sowohl solche Aufschlußverfahren zu verstehen, bei denen die Abfälle in einer Sulfat- oder Bisulfat-Schmelze oxidativ bei hohen Temperaturen, beispielsweise bei $800^{\circ}$C, zersetzt werden, als auch solche, bei welchen die Abfälle mit verhältnismäßig hochkonzentrierter Schwefelsäure, beispielsweise mit 90 %iger oder mit konzentrierter $H_2SO_4$, behandelt werden (sogenannte Naßveraschungsverfahren).

Naßveraschungsverfahren sind Verfahren zur Behandlung von brennbaren, festen Abfallstoffen mit Schwefelsäure bei erhöhter Temperatur, bei welchen gleichzeitig und/oder danach die der Reaktion ausgesetzten Abfallstoffe mit konzentrierter Salpetersäure oder Stickstoffoxiden in

- 2 -

Berührung gebracht werden. Hierdurch wird kohlenstoffhaltiges Material zu nicht brennbaren Gasprodukten und einem ein niedriges Volumen aufweisenden nicht brennbaren Rest oxidiert. Auf kerntechnischem Gebiet, insbesondere auf dem Gebiet der Wiederaufarbeitung bestrahlter Kernbrenn- und/oder Brutstoffe können solche brennbaren Festabfälle, die beispielsweise aus verbrauchten Ionenaustauscherharzen, Papier, Gummihandschuhen, Kunststoffteilen verschiedener Materialien etc. bestehen können, radioaktive Stoffe, insbesondere Aktiniden wie z.B. Uran und Plutonium, enthalten. Im Hinblick auf eine möglichst geringe Gefährdung der Umwelt durch radioaktive Stoffe ist es erforderlich, daß radioaktive Abfälle, gleich welcher Art, vor ihrer Verfestigung in einer langzeitstabilen Matrix und ihrer darauf folgenden Endlagerung eine möglichst weitgehende Volumenverringerung erfahren. Hierbei ist es sowohl aufgrund einer verbesserten Abfallbehandlung als auch aufgrund einer Wiederverwendung bestimmter Wertstoffe, wie z.B. der Aktiniden, wünschenswert, die im Abfall vorhandenen Aktiniden, insbesondere Uran und Plutonium, vor der Verfestigung der Abfälle aus diesen zu entfernen.

Eine der hierfür brauchbaren Verfahrensweisen bedient sich der Naßveraschung, wie sie in einer beispielhaften Verfahrensvariante in der DE-OS 23 47 631 beschrieben ist. Hierbei werden die in den Festabfällen enthaltenen Aktinidenverbindungen durch die heiße Schwefelsäure in Sulfatokomplexe überführt, die aufgrund ihrer geringen Löslichkeiten in der verhältnismäßig konzentrierten Schwefelsäure ausfallen und mit anderen Bestandteilen des Abfalls einen festen Reaktionsrückstand bilden.

- 3 -

Zur Weiterverarbeitung der festen, Aktinidenionen und Sulfationen enthaltenden Rückstände aus Sulfataufarbeitungsverfahren für organische Festabfälle ist es bekannt, diese Rückstände mit verdünnter Schwefelsäure auszulaugen und zu waschen, die vereinigten Laug- und Wasch-Lösungen mit einer organischen Extraktionsmittellösung aus der wäßrigen Phase in die organische Phase zu überführen, die mit den Aktiniden beladene organische Phase mit Salpetersäure zur Reextraktion der Aktiniden in die wäßrige Phase zu behandeln, danach die Aktiniden mit beispielsweise Oxalsäure aus der wäßrigen Lösung zu fällen und die gefällten Oxalate zu kalzinieren oder in $HNO_3$ aufzulösen ("Radioactive waste management" Vol.2, Int.Atomic Energy Agency, Wien,1984, Nr. IAEA-CN-43/44, S. 335 - 346).

Zur Weiterverarbeitung der Aktiniden enthaltenden Rückstände kann auch ein Verfahren zur selektiven Trennung von Plutonium und Uran verwendet werden, bei welchem zu einer $Pu^{4+}$ und $UO_2^{2+}$ enthaltenden wäßrigen Lösung Schwefelsäure in solcher Menge zugegeben wird, daß das Uran anionische Sulfatokomplexe bildet, sodann ein kationisches Tensid hinzugefügt wird, den dadurch entstandenen Niederschlag aus seiner Mutterlauge in an sich bekannter Weise abgetrennt wird und nach Abtrennung des uranhaltigen Niederschlags in der verbleibenden Mutterlauge der pH-Wert so geändert wird, daß nunmehr das $Pu^{4+}$ anionische Sulfatokomplexe bildet, sodann weiteres kationisches Tensid hinzugefügt wird, der dadurch entstehende Niederschlag aus seiner Mutterlauge in an sich bekannter Weise abgetrennt wird und das Plutonium aus dem Nieder-

- 4 -

schlag mittels Kalzinieren gewonnen wird (DE-OS
32 24 803).

Bei allen bekannten Verfahren ist das Endprodukt Aktinidendioxid. Je nach angewandter Abtrennungsmethode könnte das
Aktinidendioxid entweder Restmengen an Sulfationen enthalten oder, wenn es bei zu hoher Temperatur kalziniert
worden ist, unlöslich sein. Beide Nachteile mindern
aber die Wiederverwendbarkeit des Verfahrensprodukts.

Außerdem kann beispielsweise der Plutoniumverlust bei der
Anwendung dieser Verfahren bis zu 4 bzw. 5 Gew.-% liegen.
Zudem sind die bekannten Verfahren hinsichtlich der
Handhabung und Zahl der Verfahrensschritte verhältnismäßig aufwendig.

Der Erfindung liegt die Aufgabe zugrunde, ein einfaches
Verfahren zur Überführung von im festen Rückstand eines
Sulfataufarbeitungsverfahrens für organische, aktinidenhaltige, radioaktive Festabfälle befindlichen Aktinidenionen in ein extraktives Wiederaufarbeitungsverfahren
bestrahlter Kernbrenn- und/oder Brutstoffe, dessen wäßrige
Phasen salpetersauer sind, wie beispielsweise in den
Purex-Prozeß, zu schaffen, bei welchem eine hohe Wiedergewinnung der Aktiniden ohne die Gefahr der Mitüberführung
von Sulfationen-Mengen in das extraktive Wiederaufarbeitungsverfahren bei geringstmöglichem Aufwand an Energie,
Zeit und Apparaturen gewährleistet ist.

Die Aufgabe wird erfindungsgemäß dadurch gelöst, daß

a) der Rückstand mit Wasser oder 1 bis 2 molarer Salpetersäure aufgenommen wird, wobei der größte Teil in
Lösung geht,

b) die entstandene Lösung von den unlöslichen Bestandteilen des Rückstandes abgetrennt wird und auf eine
Temperatur im Bereich von 40°C bis unterhalb des Siedepunktes erhitzt wird,

c) der heißen Lösung eine wäßrige Bariumnitratlösung in
einer Menge zugesetzt wird, die einem geringen Überschuß über der zur vollständigen Fällung der Sulfationen stöchiometrisch erforderlichen Menge entspricht,
die Reaktionslösung bei der gewählten Temperatur für
eine Dauer im Bereich von 0,5 bis 2 Stunden gehalten
wird,

d) nach der anschließenden Abkühlung auf Raumtemperatur
vom Bariumsulfat-Niederschlag abgetrennt wird und

e) die nach der Abtrennung erhaltene, sulfatfreie Aktinidennitrat-Lösung in ein extraktives Wiederaufarbeitungsverfahren bestrahlter Kernbrenn- und/oder Brutstoffe,
dessen wäßrige Phasen salpetersauer sind,

   - im Falle der Anwesenheit mehrerer Aktiniden in die
     wäßrige Phase vor der Uran-Plutonium-Trennung,
   - im Falle der Anwesenheit von Pu in die wäßrige Phase
     vor dem ersten Pu-Reinigungszyklus und
   - im Falle der Anwesenheit von U in die wäßrige Phase
     vor dem ersten U-Reinigungszyklus
   eingespeist wird.


Je nach Herkunft und Art der organischen Festabfälle
können im während des Sulfataufarbeitungsverfahrens entstandenen festen Rückstand Sulfato-Komplexe eines oder
mehrerer Aktiniden, wie z.B. Uran, Plutonium, Neptunium,
Americium etc., vorliegen. Die Aufnahme des Rückstandes

- 6 -

mit Wasser oder Salpetersäure und das Auslaugen der Sulfato-Komplexe erfolgt in der Weise, daß pro 100 bis 250 g
Rückstand ca. 1 l Wasser bzw. 1 l 1 - 2 molare Salpetersäure benötigt wird. Die Abtrennung der entstandenen
Lösung von evtl. ungelöst bleibenden Bestandteilen des
Rückstandes kann beispielsweise durch Filtration und
kurzem Nachwaschen des Rückstandes mit wenig Wasser
erreicht werden. Das Filtrat wird danach erhitzt, vorzugsweise bis auf ca. 60$^{O}$ bis ca. 80$^{O}$C und unter Rühren
mit einer Bariumnitratlösung einer Konzentration im Bereich von 50 bis 80 g/l versetzt. Es wird dabei darauf
geachtet, daß die für die Sulfat-Ausfällung benötigten
Bariumionen in nur einem geringen Überschuß, vorzugsweise im Bereich zwischen 5 und 10 Gew.-%, zugegeben
werden. Während der Sulfatfällung werden die Aktiniden-
Sulfato-Komplexe zerstört und die sich bildenden Sulfationen durch die Bariumionen gebunden. Der Niederschlag
wird aus der Lösung abgetrennt, beispielsweise durch
Filtrieren, und kann mit verhältnismäßig wenig reinem
Wasser gewaschen werden. Das erhaltene Filtrat ist
sulfationenfrei und enthält die gesamte Menge des oder
der Aktiniden und kationische Verunreinigungen des Abfalls als Nitratlösung. Die Wiedergewinnungsrate der
zuvor im Rückstand enthaltenen Aktiniden liegt bei 99
Gew.-% oder darüber.

Ein besonderer Vorteil des erfindungsgemäßen Verfahrens
ist darin zu sehen, daß es praktisch nur einen Verfahrensschritt erfordert und die resultierende Aktinidennitrat-
Lösung ohne Durchführung weiterer Zwischenschritte an

- 7 -

geeigneter Stelle einer Wiederaufarbeitungsanlage eingespeist werden kann, wo die Feinreinigung der Aktinidensalze jeweils erfolgt.

Für das erfindungsgemäße Verfahren ist es unwesentlich,
ob der resultierende Bariumsulfat-Niederschlag Einschlüsse irgendwelcher Ionen enthält und wie groß die
sich absetzenden Partikel sind; sie müssen nur gut
und rasch filtrierbar sein. Da der Bariumsulfat-Niederschlag ein neutrales, schwer lösliches Salz darstellt,
das eventuell radioaktive Verunreinigungen eingeschlossen
enthält, kann er ohne weitere Vorbehandlung in eine
stabile Endlager-Matrix inkorporiert werden.

Im folgenden wird anstelle eines Ausführungsbeispiels
der Erfindung ein beispielhafter Versuch beschrieben.

Versuch:

10 kg eines simulierten organischen Feststoffabfalls,[*]
bestehend aus 50 Gew.-% Polyvinylchlorid, 25 Gew.-%
Neopren, 15 Gew.-% Polyethylen und 10 Gew.-% Zellstoff,
welcher 120 g Cerdioxid zur Simulation des chemischen
Verhaltens von Plutoniumdioxid enthielt, wurden mit
12 l konzentrierter Schwefelsäure gemischt und gemäß
des sogen. Naßveraschungsverfahrens behandelt. Aus
dem filtrierten Rückstand dieser Verfahrensweise wurde
eine 50 g Probe entnommen und in 250 ml Wasser aufgelöst. Der nur wenige Gew.-% betragende, zurückbleibende,
unlösliche Rückstand wurde durch Filtration abgetrennt.

[*] (Chlorgehalt ca. 30 Gew.-%)

- 8 -

10 ml des Filtrats wurden auf ca. 60°C erwärmt und mit 60 ml einer 0,42 molaren und ebenfalls auf ca. 60°C erwärmten, wäßrigen Lösung von Bariumnitrat in kleinen Portionen versetzt. Dabei fiel ein Niederschlag an Bariumsulfat aus, der sich nach ca. 1 h Halten der Suspension bei 60°C leicht filtrieren ließ. Nach der Abtrennung des $BaSO_4$ wurde ein Filtrat erhalten, welches Cer-Ionen in einer Menge enthielt, die auf die Gesamtmenge des eingesetzten Cers umgerechnet eine Ausbeute von 99 Gew.-% ergab.

Kernforschungszentrum                Karlsruhe, den 28.03.1985
Karlsruhe GmbH                       PLA  8428  Gl/hr


Patentanspruch:


Verfahren zur Überführung von im festen Rückstand eines
Sulfataufarbeitungsverfahrens für organische, aktinidenhaltige,
radioaktive Festabfälle befindlichen Aktinidenionen,
welche in Form von wasserlöslichen Sulfato-Komplexen
vorliegen, in einen verwertbaren Zustand,


dadurch gekennzeichnet, daß
a) der Rückstand mit Wasser oder 1 bis 2 molarer Salpetersäure aufgenommen wird, wobei der größte Teil in Lösung geht,
b) die entstandene Lösung von den unlöslichen Bestandteilen des Rückstandes abgetrennt wird und auf eine
   Temperatur im Bereich von 40$^{o}$C bis unterhalb des Siedepunktes erhitzt wird,
c) der heißen Lösung eine wäßrige Bariumnitratlösung in
   einer Menge zugesetzt wird, die einem geringen Überschuß über der zur vollständigen Fällung der Sulfationen stöchiometrisch erforderlichen Menge entspricht,
   die Reaktionslösung bei der gewählten Temperatur für
   eine Dauer im Bereich von 0,5  bis  2    Stunden
   gehalten wird,
d) nach der  anschließenden Abkühlung auf Raumtemperatur
   vom Bariumsulfat-Niederschlag abgetrennt wird und
e) die nach der Abtrennung erhaltene, sulfatfreie Aktinidennitrat-Lösung in ein extraktives Wiederaufarbeitungsverfahren bestrahlter Kernbrenn- und/oder Brutstoffe,
   dessen wäßrige Phasen salpetersauer sind,

0165391

- 2 -

- im Falle der Anwesenheit mehrerer Aktiniden in die wäßrige Phase vor der Uran-Plutonium-Trennung,
- im Falle der Anwesenheit von Pu in die wäßrige Phase vor dem ersten Pu-Reinigungszyklus und
- im Falle der Anwesenheit von U in die wäßrige Phase vor dem ersten U-Reinigungszyklus

eingespeist wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | RESEARCH DISCLOSURE, Nr. 183, Juli 1979, Seiten 406-407, no. 18365; W.W. WHITE u.a.: "Process for purifying rare-earth compositions using fractional sulfate precipitation" * Insgesamt * | 1 | G 21 F 9/30 G 21 F 9/10 |
| | --- | | |
| Y | LU-A- 59 015 (CEA) * Ansprüche 1,7 * | 1 | |
| | --- | | |
| Y | FR-A-2 454 677 (KEWA) * Anspruch 1; Seite 5, Zeilen 7-26 * | 1 | |
| | ----- | | |

RECHERCHIERTE SACHGEBIETE (Int Cl 4)

G 21 F

Der vorliegende Recherchenbericht wurde für alle Patentansprüche erstellt

| Recherchenort | Abschlußdatum der Recherche | Prüfer |
|---|---|---|
| DEN HAAG | 27-08-1985 | NICOLAS H.J.F. |